# EUROPEAN PATENT SPECIFICATION

(11) **EP 3 633 777 B1**
(45) Date of publication and mention of the grant of the patent: **30.08.2023**
(21) Application number: 18808945.2
(22) Date of filing: 30.05.2018
(51) Int. Cl.: H01M 8/04, H01M 8/00, H02J 3/38, H02J 13/00, H01M 8/10, H01M 8/12, G06Q 10/00, H01M 8/04664, H01M 8/04992

(54) **EQUIPMENT MANAGEMENT METHOD AND EQUIPMENT MANAGEMENT DEVICE**
GERÄTEVERWALTUNGSVERFAHREN UND GERÄTEVERWALTUNGSVORRICHTUNG
PROCÉDÉ DE GESTION D'ÉQUIPEMENT ET DISPOSITIF DE GESTION D'ÉQUIPEMENT

(30) Priority: 30.05.2017 JP 2017106299
(43) Date of publication of application: 08.04.2020
(73) Proprietor: Kyocera Corporation, Kyoto-shi Kyoto 612-8501 (JP)
(72) Inventor: AIKAWA, Shinji, Kyoto-shi Kyoto 612-8501 (JP)
(74) Representative: TBK
(86) International application number: PCT/JP2018/020755
(87) International publication number: WO 2018/221582

(56) References cited:
- WO-A1-2010/058604
- JP-A- 2002 324 566
- JP-A- 2003 223 917
- JP-A- 2013 164 956
- US-A1- 2002 192 516
- US-A1- 2013 211 786

## Description

### TECHNICAL FIELD

The present invention relates to an equipment management method and an equipment management apparatus.

### BACKGROUND ART

Prior art which is related to this field is disclosing in document US 2002/0192516 A1 showing a distributed power generation system and maintenance system and maintenance method utilizing the same, document US 2013/0211786 A1 showing a fuel cell power generation apparatus, and document JP 2013-164956 A showing solid oxide state fuel cell system, and system stopping method upon failure of cell temperature sensor.

An equipment management system that manages various pieces of information on a plurality of pieces of equipment is known. The various pieces of information include basic information on equipment and maintenance information. The basic information includes, for example, an installation date, a predetermined service life, a rated power consumption, and the like. The maintenance information includes a history of past maintenance (for example, Patent Literature 1).

### CITATION LIST

### PATENT LITERATURE

Patent Literature 1: Japanese application publication No. 2005-182399

### SUMMARY OF INVENTION

An equipment management method according to a first disclosure comprises a step A of receiving, from a fuel cell system to an equipment management apparatus, a state message including an information element indicating a state of the fuel cell system; and a step B of transmitting, from the equipment management apparatus to a predetermined terminal, a notification message based on the state message, wherein the notification message includes an information element for specifying a recommended time for which maintenance of the fuel cell system is recommended to be executed. Specifying the recommended time includes specifying the recommended time based on rate at which the temperature of the fuel cell system decreases.

An equipment management apparatus according to a second disclosure comprises a receiver configured to receive, from the fuel cell system, a state message including an information element indicating a state of a fuel cell system; and a transmitter configured to transmit a notification message based on the state message, wherein the notification message includes an information element for specifying a recommended time for which maintenance of the fuel cell system is recommended to be executed. Specifying the recommended time includes specifying the recommended time based on rate at which the temperature of the fuel cell system decreases.

### BRIEF DESCRIPTION OF DRAWINGS

Fig. 1 is a diagram illustrating an equipment management system 100 according to an embodiment.
Fig. 2 is a diagram illustrating a fuel cell system 310 according to the embodiment.
Fig. 3 is a diagram illustrating an equipment management apparatus 200 according to the embodiment.
Fig. 4 is a diagram for explaining specification of recommended time according to the embodiment.
Fig. 5 is a diagram illustrating an equipment management method according to the embodiment.

### DESCRIPTION OF EMBODIMENTS

Hereinafter, an embodiment will be described. Note that, in description of the drawings below, the same or similar sections are attached with the same or similar reference signs. However, it should be noted that the drawings are schematic drawings, and a ratio of each dimension and the like may be different from actual ones.

Accordingly, a specific dimension and the like need to be determined in consideration of the description below. Further, between mutual drawings, there may also be a case where sections have dimensions that are different from each other in relationships or ratios as a matter of course.

### [Overview of Disclosure]

In recent years, an attempt has been made to arrange a vendor who performs equipment maintenance when equipment abnormality is detected using the above-described equipment management system.

For example, in a case where equipment managed by the equipment management system is a fuel cell system, a case where the fuel cell system has a high temperature at a time point at which an abnormality of the equipment is detected. In such a case, even if a vendor is arranged when an abnormality of the equipment is detected, a situation where the vendor cannot perform maintenance of the fuel cell system until the temperature of the fuel cell system decreases can be considered.

A disclosure indicated below describes an equipment management method and an equipment management apparatus that enable maintenance of a fuel cell system to be performed efficiently in order to solve the above-described problem.

### [Embodiment]

### (Equipment management system)

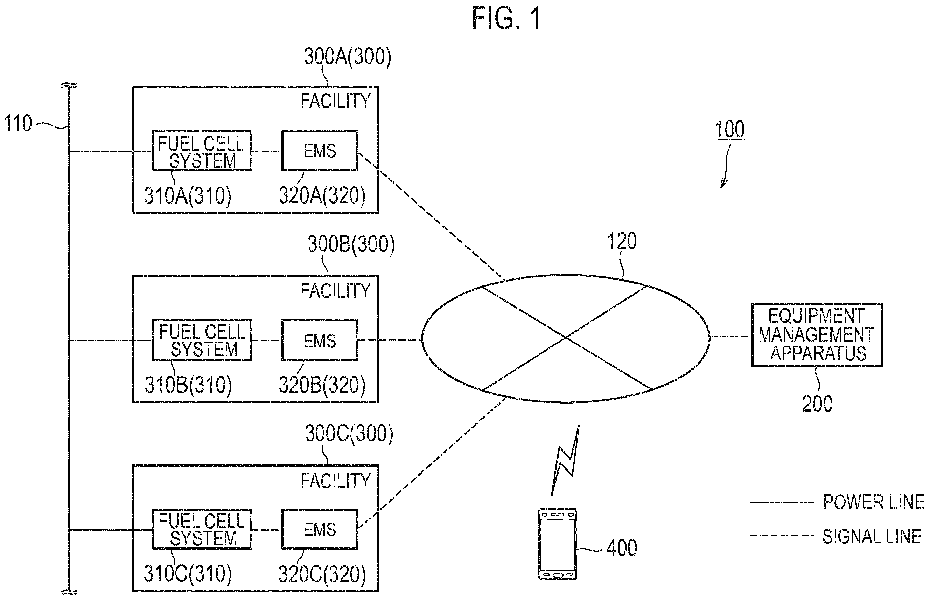

Hereinafter, an equipment management system according to an embodiment will be described. As illustrated in Fig. 1, an equipment management system 100 includes an equipment management apparatus 200, a facility 300, and a predetermined terminal 400. Fig. 1 exemplifies facilities 300A to 300C as the facility 300. The equipment management apparatus 200 and the facility 300 are connected to a network 120. The network 120 may provide a line between the equipment management apparatus 200 and the facility 300, and a line between the equipment management apparatus 200 and the predetermined terminal 400. The network 120 is, for example, the Internet. As the network 120, a dedicated line, such as a VPN, may be provided.

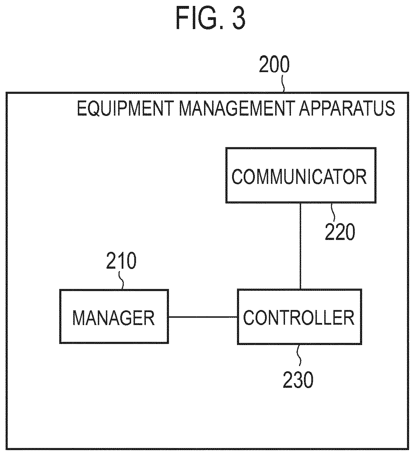

The equipment management apparatus 200 manages equipment provided in the facility 300. Details of the equipment management apparatus 200 will be described later (see Fig. 3).

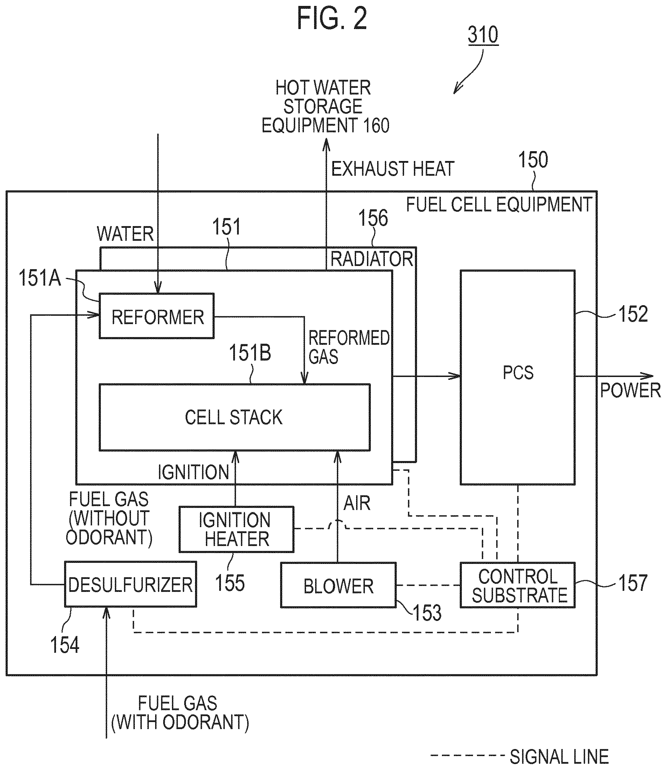

The facility 300 has a fuel cell system 310 and an EMS 320. The fuel cell system 310 includes equipment that generates power using fuel, such as gas. Details of the fuel cell system 310 will be described later (see Fig. 2). The EMS 320 is equipment (energy management system) that controls equipment provided in the facility 300.

The facility 300 may have load equipment that consumes power. The load equipment is, for example, air conditioning equipment, lighting equipment, audio visual (AV) equipment, and the like. The facility 300 may have a distributed power supply other than the fuel cell system 310. The distributed power supply may include, for example, equipment that generates power using natural energy, such as solar light, wind power, geothermal energy, and may include storage battery equipment.

The predetermined terminal 400 may be a terminal held by a manager who manages equipment provided in the facility 300. The predetermined terminal 400 may be a terminal held by a worker who performs maintenance of equipment provided in the facility 300. The predetermined terminal 400 may be a terminal belonging to a company, such as a power generation company, a power transmission and distribution company, a retailer. The predetermined terminal 400 may be a smartphone, a tablet terminal, or a personal computer.

Here, the equipment management system 100 may have a power management server. The power management server transmits, for example, a power flow control message requesting control of a power flow amount from a power grid 110 to the facility 300, a reverse power flow control message requesting control of a reverse power flow amount from the facility 300 to the power grid 110, a power control message requesting control of the fuel cell system 310 (distributed power supply) provided in the facility 300, and the like to the facility 300.

### (Fuel cell system)

Hereinafter, a fuel cell system according to the embodiment will be described. Fig. 2 is a diagram illustrating the fuel cell system 310 according to the embodiment. The fuel cell system 310 includes at least fuel cell equipment 150. The fuel cell system 310 may include hot water storage equipment 160. Here, the fuel cell system 310 will be described as being a cogeneration system including both the fuel cell equipment 150 and the hot water storage equipment 160.

The fuel cell equipment 150 is equipment that generates power using fuel, such as gas. The hot water storage equipment 160 is equipment that generates hot water or maintains a water temperature using fuel, such as gas. Specifically, the hot water storage equipment 160 has a hot water storage tank, warms water supplied from the hot water storage tank by heat generated by combustion of fuel or exhaust heat generated by power generation of the fuel cell equipment 150, and returns the warmed water to the hot water storage tank.

As illustrated in Fig. 2, the fuel cell equipment 150 has a fuel cell 151, a PCS 152, a blower 153, a desulfurizer 154, an ignition heater 155, a radiator 156, and a control substrate 157.

The fuel cell 151 is equipment that generates power using fuel. Specifically, the fuel cell 151 includes a reformer 151A and a cell stack 151B.

The reformer 151A generates reformed gas from fuel from which an odorant is removed by the desulfurizer 154 described later. The reformed gas is a gas including hydrogen and carbon monoxide.

The cell stack 151B generates power by a chemical reaction between air (oxygen) supplied from the blower 153 described later and the reformed gas. Specifically, the cell stack 151B has a structure in which a plurality of cells is stacked. Each cell has a structure in which an electrolyte is sandwiched between a fuel electrode and an air electrode. The reformed gas (hydrogen) is supplied to the fuel electrode, and air (oxygen) is supplied to the air electrode. A chemical reaction of the reformed gas (hydrogen) and the air (oxygen) occurs in the electrolyte to generate power (DC power) and heat.

The PCS 152 is equipment (power conditioning system) that converts DC power output from the fuel cell 151 into AC power.

The blower 153 supplies air to the fuel cell 151 (cell stack 151B). The blower 153 is configured with, for example, a fan. The blower 153 cools the cell stack 151B so that a temperature of the cell stack 151B does not exceed an upper limit of an allowable temperature.

The desulfurizer 154 removes the odorant contained in fuel supplied from the outside. The fuel may be city gas or propane gas.

The ignition heater 155 is a heater that ignites fuel (hereinafter, unreacted fuel) that does not react chemically in the cell stack 151B and maintains the temperature of the cell stack 151B at a high temperature. That is, the ignition heater 155 ignites unreacted fuel leaking from an opening of each cell constituting the cell stack 151B. It should be noted that the ignition heater 155 preferably ignites unreacted fuel in a case where the unreacted fuel is not combusted (for example, at the time of starting the fuel cell equipment 150). Then, after the combustion of the unreacted gas starts, the temperature of the cell stack 151B is maintained at a high temperature as the combustion of the unreacted fuel which overflows slightly from the cell stack 151B continues.

The radiator 156 cools water (hereinafter, reflux water) flowing from the hot water storage equipment 160 to the fuel cell equipment 150, so that a temperature of the reflux water does not exceed an upper limit of an allowable temperature. The radiator 156 may also cool the cell stack 151B so that the temperature of the cell stack 151B does not exceed an upper limit of an allowable temperature.

The control substrate 157 is a substrate, on which a circuit for controlling the fuel cell 151, the PCS 152, the blower 153, the desulfurizer 154, the ignition heater 155, and the control substrate 157 is mounted.

The reformer 151A, the blower 153, the desulfurizer 154, the ignition heater 155, and the control substrate 157 are an example of auxiliaries that assist operation of the cell stack 151B. Further, part of the PCS 152 may be treated as auxiliaries.

An operating state of the fuel cell system 310 includes a power generation state (also referred to as during power generation), a stop state (also referred to as during stoppage), a start state (also referred to as during start), a stopping operation state (also referred to as during stopping operation), an idle state (also referred to as during idling), and the like.

The power generation state is a state in which power generation is performed by the fuel cell 151. The start state is a state from the stop state to the power generation state. The stop state is a state in which operation of the fuel cell 151 is stopped. The stopping operation state is a state from the power generation state to the stop state. The idle state is a state in which power is not output from the fuel cell system 310, but the temperature of the cell stack 151B is maintained at a predetermined temperature. The predetermined temperature may be approximately the same as a power generation temperature (for example, 650°C to 1000°C) of the cell stack 151B in the power generation state, and may be a temperature (for example, 450°C to 600°C) lower than the power generation temperature. In the idle state, power of the auxiliaries may be covered by power output from the fuel cell 151, may be covered by power supplied from another distributed power supply (for example, equipment or storage battery equipment that generates power using natural energy), or may be covered by power supplied from the power grid 110.

In the example illustrated in Fig. 2, the control substrate 157 is provided in the fuel cell equipment 150. However, the embodiment is not limited to the above. The fuel cell system 310 may include a remote controller that receives user operation, and the control substrate 157 may be provided in a remote controller. Alternatively, a function of the control substrate 157 may be realized by both the substrate provided in the fuel cell equipment 150 and the remote controller.

### (Equipment management apparatus)

Hereinafter, an equipment management apparatus according to the embodiment will be described. As illustrated in Fig. 3, the equipment management apparatus 200 includes a manager 210, a communicator 220, and a controller 230.

The manager 210 is configured with a storage medium, such as a non-volatile memory and/or an HDD, and manages information on a plurality of the facilities 300.

The manager 210 may store basic information of equipment provided in each of a plurality of the facilities 300. For example, the manager 210 stores a facility name, a facility ID, an equipment name, an equipment ID, an introduction year, aging, and a useful life by associating them with each other. The facility name is a name of the facility 300 where the equipment is installed. The facility ID is an identifier for identifying the facility 300. The equipment name is a name of equipment. The equipment ID is an identifier for identifying equipment. The introduction year is a year in which equipment is introduced. The aging indicates years that have passed since introduction of equipment. The useful life is determined by a manufacturer of equipment, and the like, and is information indicating a period in which equipment can be used appropriately after the equipment is introduced.

The manager 210 may store, for each of a plurality of the facilities 300, maintenance information of equipment provided in each of a plurality of the facilities 300. For example, the manager 210 stores a facility name, an equipment name, a maintenance date, a maintenance outline, and a maintenance detail by associating them with each other. The manager 210 may store a facility ID and an equipment ID by associating them with each other together with these pieces of information. The facility name and the equipment name are as described above. The maintenance date is a date on which maintenance is performed. The maintenance outline is information indicating an outline of maintenance, and the maintenance detail is information indicating the details of maintenance. The maintenance information according to the embodiment preferably includes at least a maintenance period (planned) for performing maintenance of equipment in the future. The maintenance information may include a maintenance period in which maintenance of equipment is performed in the past.

Here, the maintenance includes, for example, an inspection for examining a deterioration state of equipment, maintenance for performing minor maintenance at the time of inspection, a repair for dealing with a failure of equipment, replacement for replacing existing equipment with new equipment, and the like. Hereinafter, a case where the maintenance is a repair or replacement will be mainly described.

In the embodiment, the manager 210 may manage information indicating a temperature environment of the fuel cell system 310. Information indicating a temperature environment may include at least any one of parameters of a temperature (indoor temperature, outdoor temperature) at an installation location of the fuel cell system 310, a weather at the installation location of the fuel cell system 310, a wind speed at the installation location of the fuel cell system 310, an amount of solar radiation at the installation location of the fuel cell system 310. A temperature, a wind speed, and an amount of solar radiation may be acquired from an external server, such as a weather server.

The manager 210 may manage information indicating an installation environment of the fuel cell system 310. The information indicating an installation environment may include at least any one of a parameter indicating that the installation location of the fuel cell system 310 is outdoor, a parameter indicating that the installation location of the fuel cell system 310 is indoor, a parameter indicating that the installation location of the fuel cell system 310 is on a lower floor (for example, a first floor), and a parameter indicating that the installation location of the fuel cell system 310 is on an upper floor (for example, a roof).

The communicator 220 is configured with a communication module, and communicates with the facility 300 and the predetermined terminal 400 via the network 120. The communicator 220 constitutes a receiver that receives a state message including an information element indicating a state of the fuel cell system 310. The communicator 220 may receive the state message from the fuel cell system 310 via the EMS 320, and may receive the state message from the fuel cell system 310 without the EMS 320. The communicator 220 constitutes a transmitter that transmits a notification message including an information element for specifying recommended time for which execution of maintenance of the fuel cell system 310 is recommended to the predetermined terminal 400. The information element for specifying the recommended time is an information element indicating a recommended time specified by the controller 230 described later.

Here, the state message may include an information element indicating a type (hereinafter, the stop operation type) of stopping operation by which the fuel cell system 310 is stopped. The stop operation type is, for example, normal stop and shutdown. The normal stop is operation, in which although the power generation by the fuel cell 151 is stopped, the blower 153 or the radiator 156 is not stopped, and the operation of the fuel cell system 310 is stopped while the temperature of the cell stack 151B is lowered using the blower 153 or the radiator 156. On the other hand, the shutdown is operation of stopping not only the power generation by the fuel cell 151, but also the entire operation of the fuel cell system 310. The operation of the normal stop is, for example, operation executed in response to a relatively minor abnormality (hereinafter, referred to as a first abnormality) or operation executed in periodic maintenance of the fuel cell system 310. On the other hand, the operation of the shutdown is, for example, operation that is executed in response to a relatively serious abnormality (hereinafter, referred to as a second abnormality), or operation that is executed in a state where the normal stop cannot be performed. The second abnormality is a more serious abnormality than the first abnormality.

The state message may include an information element indicating a type (hereinafter referred to as the operation state type) of an operating state of the fuel cell system 310 at the time of occurrence of an abnormality. The operation state type is, for example, a power generation state, a stop state, a start state, a stop operation state, an idle state, or the like.

The state message may include an information element indicating an abnormal part of the fuel cell system 310 in which the abnormality has occurred. A part of the fuel cell system 310 is, for example, a part (the cell stack 151B, the blower 153) illustrated in Fig. 2. A part of the fuel cell system 310 may include the hot water storage equipment 160 and may include a remote controller.

The state message may include two or more information elements selected from an information element indicating the stop operation type, an information element indicating the operation state type, and an information element indicating an abnormal part.

The state message may include an information element indicating a temperature environment, and may include an information element indicating an installation environment. The information element indicating a temperature environment may include an information element indicating the temperature of the cell stack 151. The information element indicating an installation environment may include an information element indicating an outside air temperature.

The controller 230 is configured with a memory, a CPU, and the like, and controls each component provided in the equipment management apparatus 200. In the embodiment, the controller 230 specifies recommended time for which execution of the maintenance of the fuel cell system 310 is recommended based on the state message. Here, the recommended time does not include time when maintenance cannot be performed due to a temperature of the fuel cell system 310. For example, the controller 230 specifies time after a timing at which the temperature of the fuel cell system 310 falls below a predetermined temperature as the recommended time.

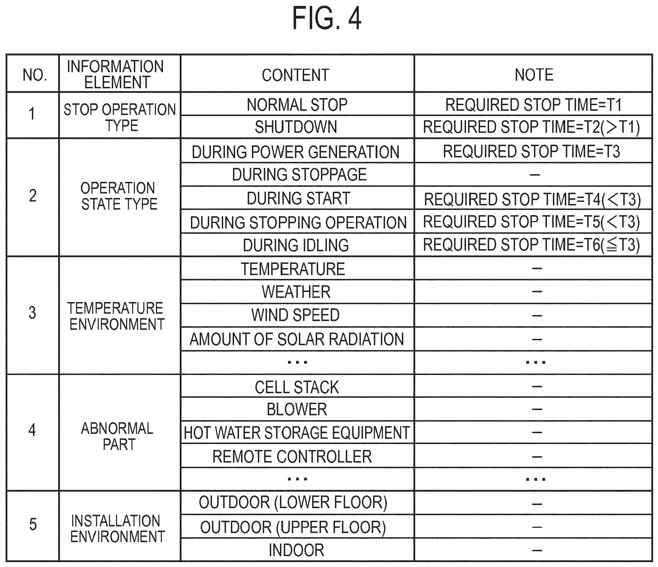

The controller 230 may specify the recommended time based on the stop operation type as illustrated in No. 1 of Fig. 4. This is because the time from the start of the stop operation to the completion of the stop operation (hereinafter referred to as the required stop time) varies depending on the stop operation type, and a speed at which the temperature of the fuel cell system 310 decreases varies depending on the stop operation type. Specifically, since a cooling effect by the blower 153 or the radiator 156 cannot be expected in the shutdown, a stop time T2 associated with the shutdown is longer than a stop time T1 associated with the normal stop. Therefore, the controller 230 specifies time later than the recommended time corresponding to the normal stop as the recommended time corresponding to the shutdown. The recommended time corresponding to the shutdown may overlap with part of the recommended time corresponding to the normal stop.

The controller 230 may specify the recommended time based on the operation state type, as illustrated in No. 2 of Fig. 4. This is because the temperature of the fuel cell system 310 at the start of the stopping operation differs depending on the operation state. Specifically, the temperature of the fuel cell system 310 in the start state or the stop operation state is lower than the temperature of the fuel cell system 310 in the power generation state. That is, a stop time T4 corresponding to the start state or a stop time T5 corresponding to the stop operation state is shorter than a stop time T3 corresponding to the power generation state. Therefore, the controller 230 specifies time before the recommended time corresponding to the power generation state as the recommended time corresponding to the start state or the stop operation state. The recommended time corresponding to the start state or the stop operation state may overlap with the recommended time corresponding to the power generation state. The temperature of the fuel cell system 310 in the idle state is less than or equal to the temperature of the fuel cell system 310 in the power generation state. That is, a stop time T6 corresponding to the idle state is equal to or less than the stop time T3 corresponding to the power generation state. Therefore, the controller 230 specifies, as the recommended time corresponding to the idle state, time similar to the recommended time corresponding to the power generation state or time earlier than the recommended time corresponding to the power generation state. The recommended time corresponding to the idle state may overlap with the recommended time corresponding to the power generation state.

The controller 230 may specify the recommended time based on the temperature environment of the fuel cell system 310, as illustrated in No. 3 of Fig. 4. This is because a rate at which the temperature of the fuel cell system 310 decreases varies depending on the temperature environment.

The controller 230 may specify the recommended time based on an abnormal part as illustrated in No. 4 of Fig. 4. This is because a temperature of an abnormal part at the time of starting the stop operation is different for each abnormal part. Specifically, the temperature of the cell stack 151B is the highest, and a temperature of a part is lower as the part is disposed at a position farther from the cell stack 151B. For example, the controller 230 specifies time earlier than the recommended time corresponding to the cell stack 151B as the recommended time corresponding to the hot water storage equipment 160 or the remote controller. Part of the recommended time corresponding to the hot water storage equipment 160 or the remote controller may overlap with the recommended time corresponding to the cell stack 151B.

The controller 230 may specify the recommended time based on an installation environment of the fuel cell system 310, as illustrated in No. 5 of Fig. 4. This is because a rate at which the temperature of the fuel cell system 310 decreases varies depending on the installation environment.

Here, the controller 230 may specify the recommended time based on two or more information elements selected from among the stop operation type, the operation state type, the temperature environment, the abnormal part, and the installation environment.

Furthermore, the controller 230 may specify the recommended time based on a normal part. For example, in a case where it is possible to specify whether or not all parts are normal, a part other than the normal part is an abnormal part.

### (Equipment management method)

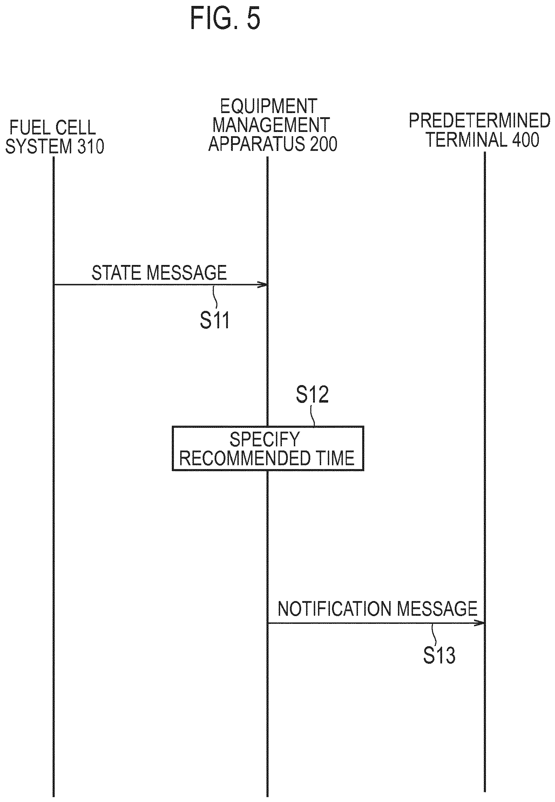

Hereinafter, an equipment management method according to the embodiment will be described. In Fig. 5, although the EMS 320 is omitted, the state message may be transmitted via the EMS 320.

As illustrated in Fig. 5, in Step S11, the fuel cell system 310 transmits the state message to the equipment management apparatus 200. The state message may include at least any one of an information element indicating the stop operation type, an information element indicating the operation state type, and an information element indicating an abnormal part.

In Step S12, the equipment management apparatus 200 specifies the recommended time based on the state message. The method of specifying the recommended time is as described above (see Fig. 4 and the like). Here, even in a case where the information element included in the state message is not referred to in the specification of the recommended time, the recommended time is specified according to the reception of the state message, so that the specification of the recommended time is based on the state message.

In Step S13, the equipment management apparatus 200 transmits, to the predetermined terminal 400, a notification message including an information element for identifying the recommended time.

### (Function and effect)

In the embodiment, the equipment management apparatus 200 specifies the recommended time based on the state message, and transmits a notification message including the recommended time to the predetermined terminal 400. According to such a configuration, since the notification message includes the recommended time, it is possible to reduce the time for a vendor who performs maintenance to wait until the temperature of the fuel cell system 310 decreases, and the maintenance of the fuel cell system 310 can be performed efficiently.

### (Other embodiments)

The present invention has been described based on the embodiment described above. However, a statement and the drawings constituting part of the disclosure should not be understood as limiting the present invention. This disclosure will clarify a variety of alternative embodiments, examples, and operation techniques for a person skilled in the art.

In the embodiment, the manager 210 is provided in the equipment management apparatus 200, but the embodiment is not limited to this. For example, the manager 210 may be provided in a server connected to the equipment management apparatus 200 via the network 120.

As described in the embodiment, the state message may include an information element indicating the operation state type. In such a case, the state message may include an information element indicating a start time of an operation state corresponding to the operation state type. For example, the state message may include an information element indicating the start time of the start state, and may include an information element indicating the start time of the stop operation state. According to such a configuration, the temperature of the fuel cell system 310 can be estimated based on the time elapsed from the start time, and the specification accuracy of the recommended time is improved.

Although not particularly mentioned in the embodiment, the state message may include an information element indicating a time at which an abnormality of the fuel cell system 310 occurs.

In the embodiment, the fuel cell system 310 transmits the state message to the equipment management apparatus 200 when the operation of the fuel cell system 310 is stopped. However, the embodiment is not limited to the above. The fuel cell system 310 may transmit the state message to the equipment management apparatus 200 when it is predicted that the operation of the fuel cell system 310 is to be stopped before the operation of the fuel cell system 310 is stopped. In such a case, the stop operation type is a type of the stop operation for stopping according to an abnormality predicted by the fuel cell system 310, the operation state type is a type of the operation state of the fuel cell system 310 assumed at the time an abnormality predicted by the fuel cell system 310 occurs, and the abnormal part is a part where an abnormality predicted by the fuel cell system 310 is assumed to occur.

In the embodiment, the information element for specifying the recommended time is an information element indicating the recommended time. However, the embodiment is not limited to the above. The information element for specifying the recommended time may be an information element indicating the above-described required stop time. This is because the recommended time can be specified by the required stop time. The information element for specifying the recommended time may be the information element illustrated in Fig. 4 (at least any one of information element of the stop operation type, the stop operation state, the temperature environment, the abnormal part, and the installation environment). This is because the recommended time can be specified by these information elements.

In the embodiment, at least either one of the recommended time and the required stop time can be specified based on the information element illustrated in Fig. 4. However, the embodiment is not limited to the above. At least either one of the recommended time and the required stop time may be predicted based on an abnormality history of the fuel cell system 310 in the past. In such prediction, the information element illustrated in Fig. 4 may be referred to.

At least any one of the equipment management apparatus 200, the fuel cell system 310, and the predetermined terminal 400 may have a display for displaying various messages. The various messages are, for example, the state message and the notification message described above.

The fuel cell equipment 150 is a solid oxide fuel cell (SOFC). However, the fuel cell equipment 150 may be a polymer electrolyte fuel cell (PEFC), a phosphoric acid fuel cell (PAFC), or a molten carbonate fuel cell (MCFC).

## Claims

1. An equipment management method comprising:
receiving (S11), by an equipment management apparatus (200), from a fuel cell system (310), a state message including an information element indicating a state of the fuel cell system (310);
specifying (S12), by the equipment management apparatus (200), the recommended time based on the state message,
transmitting (S13), by the equipment management apparatus (200), to a predetermined terminal (400), a notification message based on the state message, wherein the notification message includes an information element indicating a recommended time for which maintenance of the fuel cell system (310) is recommended to be executed, and
**wherein the specifying the recommended time includes specifying the recommended time based on** the **rate at which the temperature of the fuel cell system (310) decreases.**

2. The equipment management method according to claim 1, wherein
the receiving of the state message includes receiving the state message including an information element indicating a type of stop operation in which the fuel cell system (310) is stopped,
the specifying the recommended time **based on the rate** includes specifying the recommended time based on the type of the stop operation.

3. The equipment management method according to claim 1 or 2, wherein
the receiving of the state message includes receiving the state message including an information element indicating a type of an operation state of the fuel cell system (310) at a time point at which an abnormality of the fuel cell system (310) occurs, and
the specifying the recommended time **based on the rate** includes specifying the recommended time based on the type of the operation state.

4. The equipment management method according to any of claims 1 to 3, wherein
the specifying the recommended time **based on the rate** includes specifying the recommended time based on a temperature environment of the fuel cell system (310) at a time point at which an abnormality of the fuel cell system (310) occurs.

5. The equipment management method according to any of claims 1 to 4, wherein
the receiving of the state message includes receiving the state message including an information element indicating an abnormal part of the fuel cell system (310) in which an abnormality of the fuel cell system (310) occurs, and
the specifying the recommended time **based on the rate** includes specifying the recommended time based on the abnormal part.

6. The equipment management method according to any of claims 1 to 5, wherein
the specifying the recommended time **based on the rate** includes specifying the recommended time based on an installation environment of the fuel cell system (310).

7. The equipment management method according to any of claims 1 to 6, wherein
the specifying the recommended time **based on the rate** includes specifying a time as the recommended time, wherein the time is a time after a timing at which a temperature of the fuel cell system (310) falls below a predetermined temperature.

8. An equipment management apparatus (200) comprising:
a receiver configured to receive, from the fuel cell system (310), a state message including an information element indicating a state of a fuel cell system (310);
a controller (230) configured to specify the recommended time based on the state message, and
a transmitter configured to transmit a notification message based on the state message, wherein the notification message includes an information element indicating a recommended time for which maintenance of the fuel cell system (310) is recommended to be executed;
**wherein the controller (230) is further configured to specify the recommended time based on rate at which the temperature of the fuel cell system 310 decreases.**

## Patentansprüche

1. Geräteverwaltungsverfahren mit den Schritten:
Empfangen (S11), durch eine Geräteverwaltungsvorrichtung (200), von einem Brennstoffzellensystem (310), einer Zustandsmeldung mit einem Informationselement, das einen Zustand des Brennstoffzellensystems (310) angibt;
Bestimmen (S12), mit der Geräteverwaltungsvorrichtung (200), die empfohlene Zeit basierend auf der Zustandsmeldung,
Übertragen (S13), durch die Geräteverwaltungsvorrichtung (200), zu einem vorbestimmten Anschluss (400), einer Benachrichtigungsmeldung basierend auf der Zustandsmeldung, wobei die Benachrichtigungsmeldung ein Informationselement beinhaltet, das eine empfohlene Zeit angibt, für die eine Ausführung einer Wartung des Brennstoffzellensystems (310) empfohlen ist, und
wobei das Bestimmen der empfohlenen Zeit ein Bestimmen der empfohlenen Zeit basierend auf dem Maß beinhaltet, mit dem die Temperatur des Brennstoffzellensystems (310) abnimmt.

2. Geräteverwaltungsverfahren nach Anspruch 1, wobei
das Empfangen der Zustandsmeldung das Empfangen der Zustandsmeldung mit einem Informationenelement umfasst, das eine Art von Haltvorgang angibt, bei dem das Brennstoffzellensystem (310) angehalten wird,
das Bestimmen der empfohlenen Zeit basierend auf dem Maß ein Bestimmen der empfohlenen Zeit basierend auf der Art von Haltvorgang umfasst.

3. Geräteverwaltungsverfahren nach Anspruch 1 oder 2, wobei
das Empfangen der Zustandsmeldung ein Empfangen der Zustandsmeldung mit einem Informationselement umfasst, das einen Art eines Betriebszustands des Brennstoffzellensystems (310), zu einem Zeitpunkt angibt, zu dem eine Anomalie des Brennstoffzellensystems (310) auftritt, und
das Bestimmen der empfohlenen Zeit basierend auf dem Maß ein Bestimmen der empfohlenen Zeit basierend auf der Art des Betriebszustands umfasst.

4. Geräteverwaltungsverfahren nach einem der Ansprüche 1 bis 3, wobei
das Bestimmen der empfohlenen Zeit basierend auf dem Maß ein Bestimmen der empfohlenen Zeit basierend auf einer Temperaturumgebung des Brennstoffzellensystems (310) zu einem Zeitpunkt umfasst, zu dem eine Anomalie des Brennstoffzellensystems (310) auftritt.

5. Geräteverwaltungsverfahren nach einem der Ansprüche 1 bis 4, wobei
das Empfangen der Zustandsmeldung ein Empfangen der Zustandsmeldung mit einem Informationselement umfasst, das einen abnormaler Teil des Brennstoffzellensystems (310) angibt, bei dem eine Anomalie des Brennstoffzellensystems (310) auftritt, und
das Bestimmen der empfohlenen Zeit basierend auf dem Maß ein Bestimmen der empfohlenen Zeit basierend auf dem abnormalen Teil umfasst.

6. Geräteverwaltungsverfahren nach einem der Ansprüche 1 bis 5, wobei
das Bestimmen der empfohlenen Zeit basierend auf dem Maß ein Bestimmen der empfohlenen Zeit basierend auf einer Installationsumgebung des Brennstoffzellensystems (310) umfasst.

7. Geräteverwaltungsverfahren nach einem der Ansprüche 1 bis 6, wobei
das Bestimmen der empfohlenen Zeit basierend auf dem Maß ein Bestimmen einer Zeit als der empfohlenen Zeit umfasst, wobei die Zeit eine Zeit nach einem Zeitpunkt ist, zu dem eine Temperatur des Brennstoffzellensystems (310) unterhalb einer vorbestimmten Temperatur fällt.

8. Geräteverwaltungsvorrichtung (200) mit:
einem Empfänger, der dazu eingerichtet ist, von dem Brennstoffzellensystem (310) eine Zustandsmeldung mit einem Informationselement zu empfangen, das einen Zustand des Brennstoffzellensystems (310) angibt;
einer Steuereinrichtung (230), die dazu eingerichtet ist, die empfohlene Zeit basierend auf der Zustandsmeldung zu bestimmen, und
einer Übertragungseinrichtung, die dazu eingerichtet ist, eine Benachrichtigungsmeldung basierend auf der Zustandsmeldung zu übertragen, wobei die Benachrichtigungsmeldung ein Informationselement beinhaltet, das eine empfohlene Zeit angibt, für die eine Ausführung einer Wartung des Brennstoffzellensystems (310) empfohlen ist,
wobei die Steuereinrichtung (230) ferner dazu eingerichtet ist, die empfohlene Zeit basierend auf einem Maß zu bestimmen, mit dem die Temperatur des Brennstoffzellensystems (310) abnimmt.

## Revendications

1. Méthode de gestion de l'équipement comprenant :
réception (S11), par un appareil de gestion de l'équipement (200), d'un système de pile à combustible (310), d'un message d'état comprenant un élément d'information indiquant l'état du système de pile à combustible (310) ;
spécification (S12), par l'appareil de gestion de l'équipement (200), du temps recommandé basé sur le message d'état,
transmission (S13), par l'appareil de gestion de l'équipement (200), à un terminal prédéterminé (400), d'un message de notification basé sur le message d'état, dans lequel le message de notification comprend un élément d'information indiquant un temps recommandé pour lequel il est recommandé d'effectuer l'entretien du système de pile à combustible (310), et
la spécification du temps recommandé comprenant la spécification du temps recommandé basé sur la vitesse à laquelle la température du système de pile à combustible (310) diminue.

2. Méthode de gestion de l'équipement selon la revendication 1, dans laquelle
la réception du message d'état comprend la réception du message d'état comprenant un élément d'information indiquant un type d'opération d'arrêt dans lequel le système de pile à combustible (310) est arrêté,
la spécification du temps recommandé basé sur la vitesse comprend la spécification du temps recommandé basé sur le type de l'opération d'arrêt.

3. Méthode de gestion de l'équipement selon la revendication 1 ou 2, dans laquelle
la réception du message d'état comprend la réception du message d'état comprenant un élément d'information indiquant un type d'état de fonctionnement du système de pile à combustible (310) à un moment où une anomalie du système de pile à combustible (310) se produit, et
la spécification du temps recommandé basé sur la vitesse comprend la spécification du temps recommandé basé sur le type d'état de fonctionnement.

4. Méthode de gestion de l'équipement selon l'une des revendications 1 à 3, dans laquelle
la spécification du temps recommandé basé sur la vitesse comprend la spécification du temps recommandé basé sur un environnement de température du système de pile à combustible (310) à un moment où une anomalie du système de pile à combustible (310) se produit.

5. Méthode de gestion de l'équipement selon l'une des revendications 1 à 4, dans laquelle
la réception du message d'état comprend la réception du message d'état comprenant un élément d'information indiquant une partie anormale du système de pile à combustible (310) dans laquelle une anomalie du système de pile à combustible (310) se produit, et
la spécification du temps recommandé basé sur la vitesse comprend la spécification du temps recommandé basé sur la partie anormale.

6. Méthode de gestion de l'équipement selon l'une des revendications 1 à 5, dans laquelle
la spécification du temps recommandé basé sur la vitesse comprend la spécification du temps recommandé basé sur l'environnement d'installation du système de pile à combustible (310).

7. Méthode de gestion de l'équipement selon l'une des revendications 1 à 6, dans laquelle
la spécification du temps recommandé basé sur la vitesse comprend la spécification d'un temps comme temps recommandé, le temps étant un temps après un moment où une température du système de pile à combustible (310) tombe en dessous d'une température prédéterminée.

8. Appareil de gestion de l'équipement (200) comprenant :
un récepteur configuré pour recevoir, du système de pile à combustible (310), un message d'état comprenant un élément d'information indiquant l'état d'un système de pile à combustible (310) ;
un contrôleur (230) configuré pour spécifier le temps recommandé basé sur le message d'état, et
un émetteur configuré pour transmettre un message de notification basé sur le message d'état, dans lequel le message de notification comprend un élément d'information indiquant un temps recommandé pour lequel il est recommandé d'effectuer l'entretien du système de pile à combustible (310) ;
le contrôleur (230) étant en outre configuré pour spécifier le temps recommandé basé sur la vitesse à laquelle la température du système de pile à combustible (310) diminue.
